(19) Europäisches Patentamt
European Patent Office
Office européen des brevets

(11) EP 3 453 945 A1

(12) EUROPEAN PATENT APPLICATION

(43) Date of publication:
13.03.2019 Bulletin 2019/11

(21) Application number: 18192075.2

(22) Date of filing: 31.08.2018

(51) Int Cl.:
F21S 41/20 (2018.01)    F21S 41/143 (2018.01)
F21S 41/63 (2018.01)    F21S 43/20 (2018.01)
F21S 43/14 (2018.01)    G02B 27/42 (2006.01)
G02B 27/22 (2018.01)    G02B 27/09 (2006.01)
G02B 3/00 (2006.01)    G02B 5/18 (2006.01)
F21V 5/00 (2018.01)    F21V 5/04 (2006.01)
F21V 14/06 (2006.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 08.09.2017 CN 201710811206

(71) Applicant: Valeo Vision
93012 Bobigny Cedex (FR)

(72) Inventors:
• WANG, Long
   WUHAN, Hubei 430056 (CN)

• ZHOU, Haiqing
   WUHAN, Hubei 430056 (CN)
• LUO, Ji
   Wuhan, Hubei 430056 (CN)
• YANG, Pingwu
   WUHAN, Hubei 430056 (CN)
• CHEN, Si
   WUHAN, Hubei 430056 (CN)

(74) Representative: Valeo Vision
IP Department
34, rue Saint André
93012 Bobigny (FR)

(54) **LIGHT PATTERNING DEVICE, VEHICLE LAMP COMPRISING THE SAME AND MOTOR VEHICLE**

(57) A light patterning device and a vehicle lamp including the light patterning device and a motor vehicle are provided. The light patterning device includes: at least one light source arranged to emit a light beam; a first patterning unit arranged to receive and pattern the light beam, the first patterning unit comprising a plurality of first light deflecting portions; and a second patterning unit arranged to receive and pattern the light beam which has been transmitted through the first patterning unit, the second patterning unit comprising a plurality of second light deflecting portions, wherein at least one of the first patterning unit and the second patterning unit is movable with respect to the other.

100

FIG. 1

EP 3 453 945 A1

**Description**

**BACKGROUND**

**Technical Field**

The present disclosure generally relates to the field of lighting and signaling, and in particular, to a light patterning device, a vehicle lamp including the light patterning device and a motor vehicle.

**Description of the Related Art**

With technical development and social progress, requirements of the people on a lighting or signaling device have gone beyond the function of providing illumination or signal indicator. Thus, customized requirements for the lighting or signaling device (for example a vehicle lamp for a motor vehicle) increase and it may be desired to provide more diverse patterns and lit effects of light beams. For example, it may be desired that the illumination light or signaling light includes certain information or patterns to meet the customized requirements. The prior art has proposed devices for generating patterns in the lighting or signaling device, for example, generating patterns by shielding light beams partly with opaque materials. However, such shielding with opaque materials cannot achieve dynamic effects.

**SUMMARY**

An object of the present disclosure is to provide a light patterning device that can generate a combined pattern in a light beam by using two patterning units which are rotatable with respect to each other.

Another object of the present disclosure is also to provide a vehicle lamp including the light patterning device and a motor vehicle.

An embodiment of the present disclosure provides a light patterning device for a vehicle lamp, the light patterning device including: at least one light source arranged to emit a light beam; a first patterning unit arranged to receive and pattern the light beam, the first patterning unit including a plurality of first light deflecting portions; and a second patterning unit arranged to receive and pattern the light beam which has been transmitted through the first patterning unit, the second patterning unit including a plurality of second light deflecting portions, wherein at least one of the first patterning unit and the second patterning unit is movable. In this embodiment, the first patterning unit may include a plurality of first light deflecting portions at a side of the first patterning unit facing towards or away from the light source, and the second patterning unit may include a plurality of second light deflecting portions at a side of the second patterning unit facing towards or away from the light source. However, it may be considered that the light deflecting portions are correspondingly on both sides of the patterning unit, thus finally a desired pattern can be obtained.

In an embodiment, the plurality of first light deflecting portions extend in parallel with one another and the plurality of second light deflecting portions extend in parallel with one another.

In an embodiment, the first patterning unit has a first central region, each of the first light deflecting portions extends from the first central region towards a periphery of the first patterning unit and the plurality of first deflecting portions are arranged in sequence along a circumferential direction of the first central region; and the second patterning unit has a second central region, each of the second light deflecting portions extends around the second central region and the plurality of second deflecting portions are arranged in sequence along a direction from the second central region towards a periphery of the second patterning unit.

In an embodiment, the first patterning unit has a first central region, each of the first light deflecting portions extends around the first central region and the plurality of first deflecting portions are arranged in sequence along a direction from the first central region towards a periphery of the first patterning unit; and the second patterning unit has a second central region, each of the second light deflecting portions extends from the second central region towards a periphery of the second patterning unit and the plurality of second deflecting portions are arranged in sequence along a circumferential direction of the second central region.

In an embodiment, the at least one light source is arranged on a side of the first patterning unit facing away from the second patterning unit. More specifically, the light source, the first patterning unit and the second patterning unit are arranged successively in a direction along an optical path.

In an embodiment, distance between any two of the at least one light source, the first patterning unit and the second patterning unit is adjustable. For example, the distance may be adjusted such that the distance between the at least one light source and the first patterning unit is less than the distance between the first patterning unit and the second patterning unit, or that the distance between the at least one light source and the first patterning unit is equal to the distance between the first patterning unit and the second patterning unit, or that the distance between the at least one light source and the first patterning unit is greater than the distance between the first patterning unit and the second patterning unit.

In an embodiment, the first patterning unit and the second patterning unit are translatable and/or rotatable with respect to each other.

In an embodiment, the light patterning device comprises a plurality of the light sources.

In an embodiment, the plurality of the light sources are arranged in a same plane parallel to the first patterning unit.

In an embodiment, a distance between at least one of the plurality of the light sources and the first patterning unit is different from a distance between another one of the plurality of the light sources and the first patterning unit.

In an embodiment, the light patterning device further includes a printed circuit board carrying the plurality of the light sources. For example, the plurality of light sources are arranged around an axis perpendicular to the printed circuit board.

In an embodiment, a pattern formed in a light beam emitted from at least one of the plurality of the light sources and passing through the first patterning unit and the second patterning unit is overlapped with a pattern formed in another light beam emitted from another one of the plurality of the light sources and passing through the first patterning unit and the second patterning unit.

In an embodiment, the first patterning unit and the second patterning unit are arranged in parallel to each other.

In an embodiment, the light patterning device further includes a driving device arranged to drive movement of movable patterning units of the first patterning unit and the second patterning unit. The driving device is located on a side of the light source facing away from the first patterning unit and the second patterning unit and connected with the moveable patterning unit through a driving shaft. However, it should be understood that the movement of the moveable patterning unit may also be adjusted manually.

In an embodiment, the plurality of first light deflecting portions are arranged to adjoin with each other on the first patterning unit, and the plurality of second light deflecting portions are arranged to adjoin with each other on the second patterning unit.

In an embodiment, any one of the first patterning unit and the second patterning unit is formed by a grating.

An embodiment of the present disclosure also provides a vehicle lamp including the light patterning device as described in any one of the above embodiments.

An embodiment of the present disclosure also provides a motor vehicle, including the light patterning device or the vehicle lamp as described in any one of the above embodiments.

The light patterning device as described above in the at least one embodiment of the present disclosure forms patterns having overlapping effects by rotational operation of at least two patterning units with the light deflecting portions, so as to enhance the visual effects of the lighting and/or signaling light for the vehicle lamp.

## BRIEF DESCRIPTION OF THE DRAWINGS

FIG. 1 shows a schematic view of a light patterning device according to an embodiment of the present disclosure;

FIG. 2 shows schematically an example of a first patterning unit in a light patterning device according to an embodiment of the present disclosure;

FIG. 3 shows schematically an example of a second patterning unit in a light patterning device according to an embodiment of the present disclosure;

FIG. 4 shows schematically an example of a light source arrangement in a light patterning device according to an embodiment of the present disclosure;

FIG. 5 shows schematically an example of a cross sectional shape of a light deflecting portion in a light patterning device according to an embodiment of the present disclosure;

FIG. 6 shows schematically another example of a cross sectional shape of a light deflecting portion in a light patterning device according to an embodiment of the present disclosure;

FIG. 7 and FIG. 8 show schematically work principles of the first light deflecting portion and the second light deflecting portion respectively;

FIG. 9 shows schematically an example of a pattern outputted by a light patterning device according to an embodiment of the present disclosure;

FIG. 10 shows schematically another example of a pattern outputted by a light patterning device according to an embodiment of the present disclosure;

FIG. 11 shows schematically an example of a first patterning unit in a light patterning device according to another embodiment of the present disclosure; and

FIG. 12 shows schematically an example of a second patterning unit in a light patterning device according to another embodiment of the present disclosure.

## DETAILED DESCRIPTION OF EMBODIMENTS

The technical solutions of the disclosure will be further explained in detail by way of examples, with reference to the accompanying drawings. In the specification, like or similar reference numbers indicate like or similar parts. The following description of embodiments of the present disclosure with reference to the accompanying drawings is intended to explain the general inventive concept of the present disclosure and should not be construed as limiting the present disclosure.

Further, in the following detailed description, numerous specific details are set forth in order to provide a thorough understanding of the embodiments of the present disclosure. It will be apparent, however, that one or more embodiments may also be practiced without these specific details.

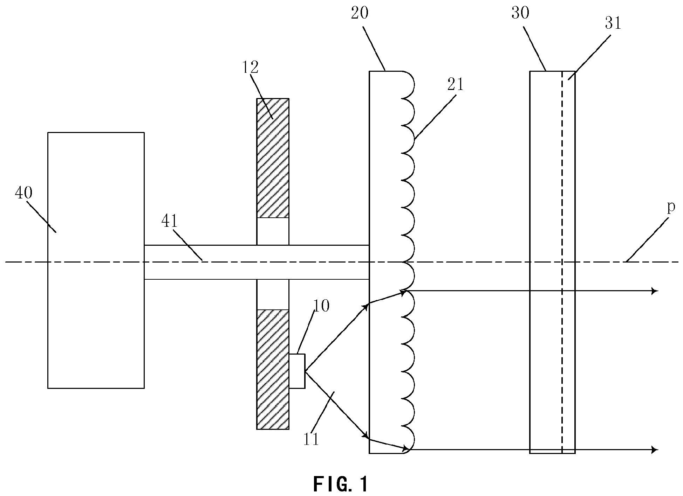

FIG. 1 schematically illustrates a light patterning device 100 for a vehicle lamp according to an embodiment of the present disclosure. The light patterning device 100 may include: a light source 10, a first patterning unit 20 and a second patterning unit 30. In the example shown in FIG. 1, the light source 10 is located at a side of the first patterning unit 20 facing away from the second patterning unit 30 (it is the left side of the first patterning unit 20 in FIG. 1). The light source 10 emits a light beam 11. The light beam 11 is received and patterned by the first patterning unit 20. The light beam 11 which has been transmitted through the first patterning unit 20 is received and patterned by the second patterning unit 30. The first patterning unit 20 may include a plurality of first light deflecting portions 21. The second patterning unit 30 may also include a plurality of second light deflecting portions 31. In the example shown in FIG.1, the first patterning unit 20 includes a plurality of first light deflecting portions 21 extending in parallel with one another and the second patterning unit 30 includes a plurality of second light deflecting portions 31 extending in parallel with one another. At least one of the first patterning unit 20 and the second patterning unit 30 is movable. For example, one of the first patterning unit 20 and the second patterning unit 30 may be rotated with respect to the other. Or the first patterning unit 20 and the second patterning unit 30 may both rotate with respect to each other. After the light beam 11 passes through the first patterning unit 20 and the second patterning unit 30, the cross section of the light beam 11 may be patterned due to the refraction effects of the plurality of first light deflecting portions 21 and the second light deflecting portions 31. The patterned light beam 11 may be emitted from the vehicle lamp, for example to form a lighting and/or signaling light beam. As shown in FIG.1, the extending direction of the second light deflecting portion 31 on the second patterning unit 30 is perpendicular to the extending direction of the first light deflecting portion on the first patterning unit 20. Thus, FIG. 1 only illustrates the bottom of the second light deflecting portion 31 by a dashed line, instead of its entire shape.

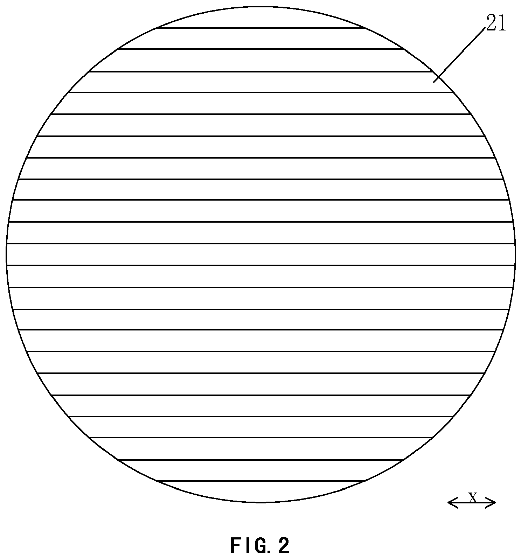

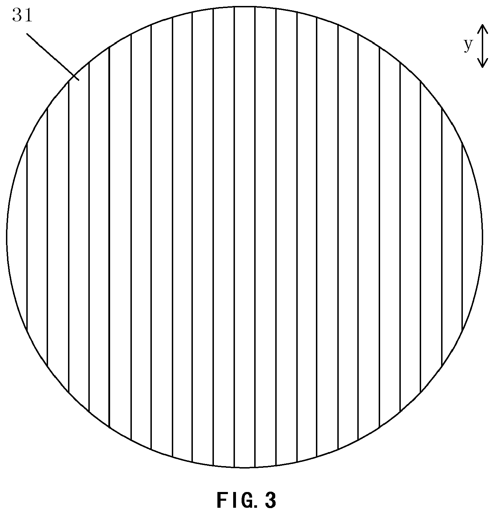

FIG. 2 and FIG. 3 schematically show examples of the first patterning unit 20 and the second patterning unit 30 respectively. It is assumed that the respective first light deflecting portions 21 extend in parallel with one another and in a first direction x and the respective second light deflecting portions 31 extend in parallel with one another and in a second direction y. As at least one of the first patterning unit 20 and the second patterning unit 30 is movable with respect to the other, an angle between the extending direction (first direction x) of the first light deflecting portion 21 and the extending direction (second direction y) of the second light deflecting portion 31 is variable. It may cause the pattern in the cross section of the light beam 11 emitted from the second patterning unit 30 can vary dynamically.

Since the respective first light deflecting portions 21 may be located at different distances from the light source 10, and the first light deflecting portions 21 and the second light deflecting portions 22 provide refraction effects for the light beam, optical path lengths of respective light beam parts emitted from the respective second light deflecting portions 31 will be different from each other. For example, as shown in FIG.1, the light beam parts that are incident through different first light deflecting portions 21 and emitted from different second light deflecting portions 31 may have different optical path lengths.

Due to such difference in the optical path lengths, when an observer views the respective light beam parts emitted from the respective second light deflecting portions 31 (or different parts of the second light deflecting portion 31), three dimensional visual effects will be produced. For example, in the case shown in FIG. 1, the observer will feel some light beam parts emitted from some parts of the second patterning unit 30 are emitted from farther position than other light beam parts. Thus, it may feel visually that the increased depth of field of the pattern is present, even it may produce curve of pattern (for example lines), so as to produce three dimensional effects.

When the light source 10 includes a plurality of point light sources, for example, a row of light emitting diodes, the three dimensional effects will become more significant because different point light sources may cause more significant difference in the optical path length among the respective light beam parts of different light beams.

FIG. 2 and FIG. 3 show that the first patterning unit 20 and the second patterning unit 30 have circular shapes. However, the embodiments of the present disclosure are not limited to this. The first patterning unit 20 and the second patterning unit 30 may alternatively have any other shapes.

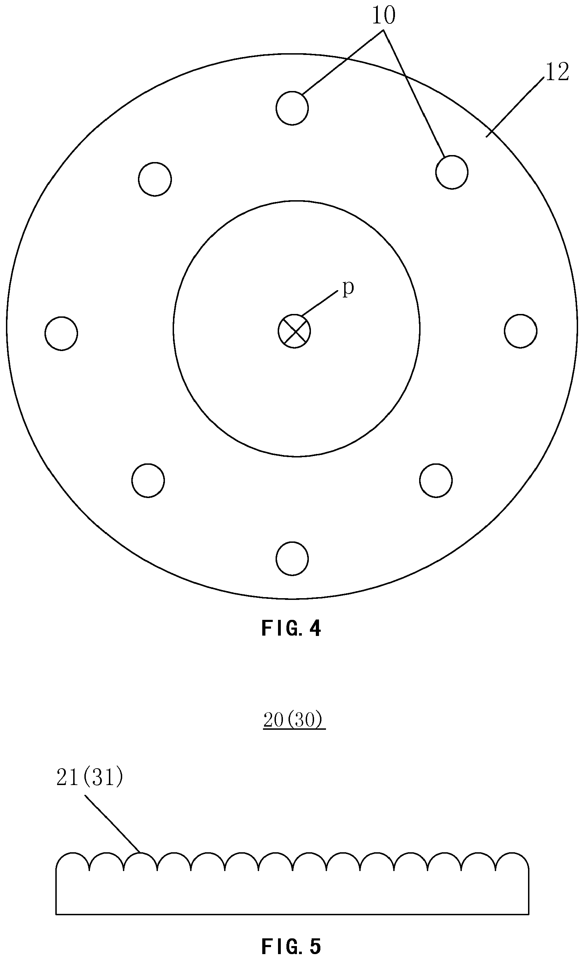

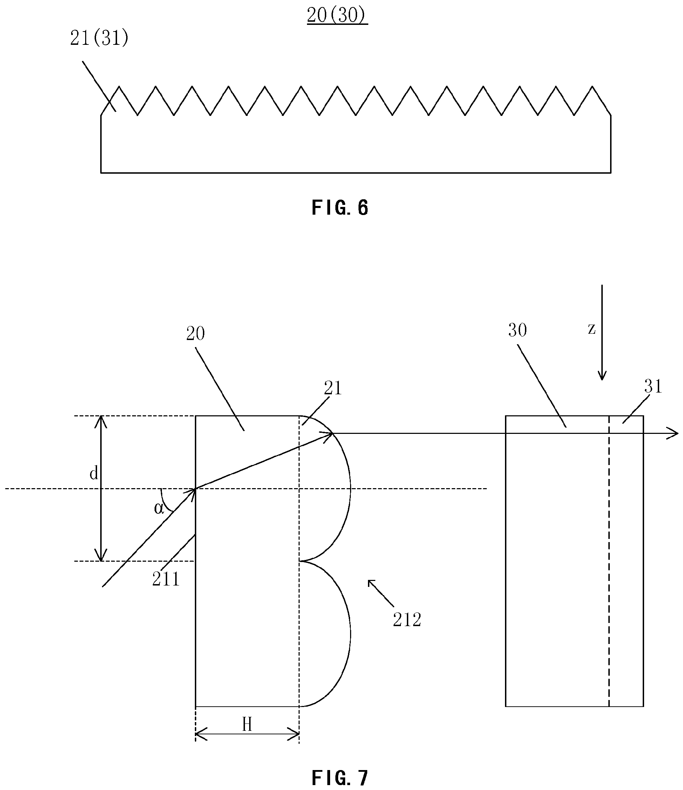

As an example, the first light deflecting portions 21 and/or the second light deflecting portions 31 have cross sections which may have circular arc-shaped profiles (as shown in FIG. 5) or triangular profiles (as shown in FIG. 6). It is advantageous for deflection of the light beam by the first light deflecting portions 21 and/or the second light deflecting portions 31 towards a side of the first patterning unit 20 and/or a side of the second patterning unit 30 facing away from the light source 10.

The work principles of the first deflecting portion 21 and the second deflecting portion 31 will be explained briefly below by taking the first deflecting portion 21 and the second deflecting portion 31 with cross sections having a circular arc-shaped profile as an example.

FIG. 7 is a schematic view showing local parts of the first patterning unit 20 and the second patterning unit 30. The first light deflecting portion 21 is provided at the local part of the first patterning unit 20. It should be noted that FIG. 7 shows the view taken along a direction perpendicular to the first direction x (i.e., the direction in which the first deflecting portion 21 extends). It may show the work principle of the first light deflecting portion 21 more clearly. The cross section of the first light deflecting portion 21 has a circular arc-shaped profile. The first light deflecting portion 21 has a width denoted by d. A distance between a first surface (light incident surface) 211 of the first patterning unit 20 and a bottom of the first deflecting portion 21 on the second surface 212 is denoted by H. An incident angle of the corresponding part of the light beam emitted from the light source 10 at a position on the first surface 211 corresponding to a center of the first light deflecting portion 21 is denoted by $\alpha$. The refractivity of the material of the first light deflecting portion 21 is denoted by n. In an example, the first light deflecting portion 21 may be configured to satisfy:

$$H \times \sin\alpha/n < d/2 \qquad \text{(Formula 1)}$$

If the Formula 1 is satisfied, at least most of light incident at the position on the first surface 211 corresponding to the first light deflecting portion 21 can exit from the first light deflecting portion 21. In this way, if it is observed from the front of the first light deflecting portion 21, the first light deflecting portion 21 is bright, in other words, a region corresponding to the first light deflecting portion 21 is lit. If all of the first light deflecting portions 21 on the first patterning unit 21 satisfy the Formula 1, the first patterning unit 21 will show a pattern with uniform bright lines. However, in embodiments of the present disclosure, it is not intended to limit all of the first deflecting portions 21 must satisfy the Formula 1. For example, the part of the light beam emitted from the light source 10 may have different incident angles at different positions on the first surface 211. In this way, when the incident angle of the part of the light beam becomes very large, the corresponding first light deflecting portion 21 may not satisfy the Formula 1 any longer. At that time, the intensity of the light emitted from the first light deflecting portion 21 will be reduced to form dark regions in the pattern. In other examples, the size of the first light deflecting portion 21 may alternatively be adjusted as required to obtain different bright and dark regions.

As an example, the width d of each first light deflecting portion 21 may be:

$$d = 2 \times H \times \arcsin(n \times \sin(\arctan(H(n-1))/2r)) \qquad \text{(Formula 2)}$$

where r is a radius of curvature of the circular arc-shaped profile of the first light deflecting portion 21.

As an example, the width d of the first light deflecting portion 21 may be less than 5mm, preferably less than 0.15mm, for example may be greater than 0.01mm and less than 0.15mm, or greater than 0.05mm and less than 0.15mm, or greater than 0.1mm and less than 0.15mm. As an example, the distance H between the first surface 211 and the bottom of the first deflecting portion 21 on the second surface 212 may range from 0.1mm to 5mm, for example less than 0.3mm, such as 0.237mm.

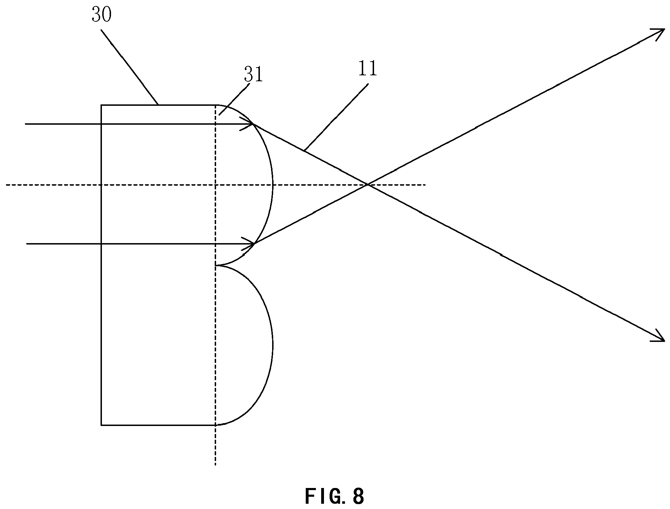

FIG.8 schematically shows effects of the second light deflecting portion 31 on the light beam 11 transmitted through the first patterning unit 20. In order to explain the effects of the second light deflecting portions 31 more clearly, in the example shown in FIG. 8, the angle between the extending direction of the second light deflecting portion 31 and the extending direction of the first light deflecting portion 21 is set as 90 degrees. The viewing direction in FIG. 8 is perpendicular to the viewing direction in FIG. 7, for example, the view in FIG. 8 may be obtained by observing the second patterning unit 30 along z direction shown in FIG. 7. As discussed above, the pattern in the light beam having passed through the first light deflecting portion 21 may have structures with bright lines or with alternately arranged bright and dark lines and the second light deflecting portion 31 may spread the pattern into an area pattern (such as a rectangle, a parallelogram or the like). As an example, the effect of the second light deflecting portion 31 deflecting the light beam 11 may cause the light beam 11 to be converged and then spread to have a larger range pattern after the light beam 11 passes through the second light deflecting portion 31, as shown in FIG. 8.

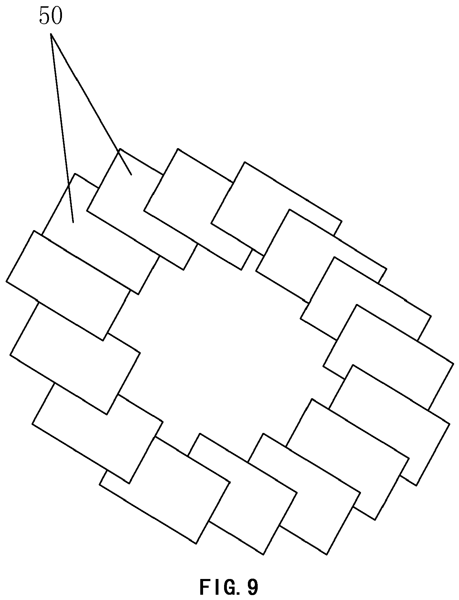

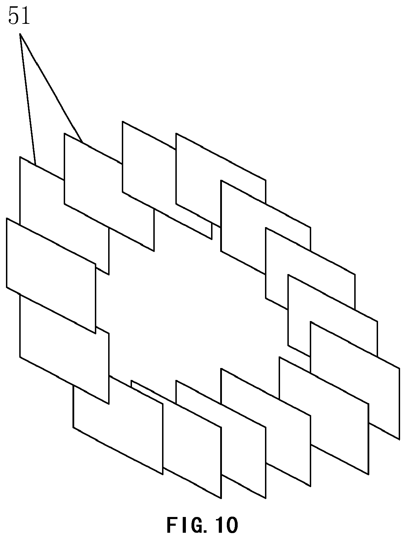

As the angle between the extending direction (first direction x) of the first light deflecting portions 21 and the extending direction (second direction y) of the second light deflecting portions 31 varies, the shape of the pattern of the light beam having passed through the second patterning unit 30 will also change. FIG. 9 shows an exemplified pattern of the light beam having passed through the second patterning unit 30 when the angle between the extending direction of the first light deflecting portions 21 and the extending direction of the second light deflecting portions 31 is 90 degrees. In FIG. 9, the pattern is shown as a rectangle. It should be noted that in the example shown in FIG. 9, the light patterning device includes a plurality of light sources. Thus, FIG. 9 shows a plurality of rectangular patterns 50 correspondingly. In order to show the overlapping effects of the patterns, FIG. 9 shows numerous patterns, however, the number of the patterns in the embodiments of the present disclosure is not limited to this. FIG. 10 shows an exemplified pattern of the light beam having passed through the second patterning unit 30 when the angle between the extending direction of the first light deflecting portions 21 and the extending direction of the second light deflecting portions 31 is 25 degrees. In FIG. 10, the pattern is shown as a parallelogram. When the angle between the extending direction of the first light deflecting portions 21 and the extending direction of the second light deflecting portions 31 becomes another angle, the pattern will be further changed. For example, When the angle between the extending direction of the first light deflecting portions 21 and the extending direction of the second light deflecting portions 31 is 0 degree, each pattern may be contracted into a line shape. Thus, when the second patterning unit 30 rotates with respect to the first patterning unit 20, the pattern outputted from the second patterning unit 30 can vary dynamically. The light patterning device 100 according to an embodiment of the present disclosure uses the light deflecting portions thereon to form the patterns, which has higher optical efficiency and can achieve dynamical patterns to improve the display effects in comparison with the case that the patterns are formed directly by opaque shielding members.

In the above embodiments, the cross section of the first light deflecting portion 21 (the section taken in a direction perpendicular to the direction in which the first light deflecting portion 21 extends) has the circular arc-shaped profile. However, embodiments of the present disclosure are not limited to this. The cross section of the first light deflecting portion 21 may alternatively have any other shapes of profile, for example, may have a triangular profile, as shown in FIG. 6.

In an example, as shown in FIG. 1, the at least one light source 10 is located at a side of the first patterning unit 20 facing away from the second patterning unit 30. Such arrangement is advantageous in that the light beam 11 emitted from the light source 10 passes through the first patterning unit 20 and the second patterning unit 30 in sequence to form patterns. And control of the shape of the patterns may be achieved by adjusting the relationship between the distance from the light source 10 to the first patterning unit 20 and the distance from the first patterning unit 20 to the second patterning unit 30. However, embodiments of the present disclosure are not limited to this, for example, the light source 10 may be arranged at any other positions and the light beam 11 emitted from the light source 10 is directed by an optical directing device such as a light guide, a mirror or the like to a light incident face of the first patterning unit 20.

For example, when the distance between the light source 10 and the first patterning unit 20 is equal to the distance between the first patterning unit 20 and the second patterning unit 30, the pattern outputted from the second patterning unit 30 may have a shape of approximate square. When the distance between the light source 10 and the first patterning unit 20 is greater than or less than the distance between the first patterning unit 20 and the second patterning unit 30, the pattern outputted from the second patterning unit 30 may have a shape of rectangle. For example, the rectangle may have a length-to-width ratio equal to a direct proportion or inverse proportion of the distance between the light source 10 and the first patterning unit 20 to the distance between the first patterning unit 20 and the second patterning unit 30.

In order to increase dynamical variation of the patterns, as an example, at least one of the first patterning unit 20 and the second patterning unit 30 may be arranged to be movable towards or away from the other of the first patterning unit 20 and the second patterning unit 30. For example, the first patterning unit 20 may be arranged to be movable towards or away from the second patterning unit 30; or the second patterning unit 30 may be arranged to be movable towards or away from the first patterning unit 20. Or, the first patterning unit 20 and the second patterning unit 30 may be movable towards or away from each other. That is, the first patterning unit 20 and/or the second patterning unit 30 may be translatable. In this way, the dynamical variation of the pattern outputted by the second patterning unit 30 may be more diverse by combining the translation and rotation movements of the first patterning unit 20 and/or the second patterning unit 30.

As an example, the light patterning device 100 may include one light source, or include a plurality of light sources 10. In the case that the light patterning device 100 includes the plurality of light sources 10, the cross section of the light beam emitted from the second patterning unit 30 may be formed with a plurality of patterns corresponding to the respective light sources respectively. Provision of more light sources may cause the second patterning unit 30 to output more patterns simultaneously, improving the display effects.

In an example, the plurality of light sources 10 may be arranged in a same plane parallel to the first patterning unit 20. That is, all of the light sources 10 have the same distance from the first patterning unit 20. It is advantageous to cause the first patterning unit 20 and the second patterning unit 30 to form uniform and stable patterns. However, embodiments of the present disclosure are not limited to this, for example, the distance from at least one light source of the plurality of light sources 10 to the first patterning unit 20 may be different from the distance from another light source of the plurality of light sources 10 to the first patterning unit 20. As an example, the light patterning device 100 may further include a printed circuit board 12 carrying the plurality of light sources 10 (in particular if the light source 10 is a light emitting diode). FIG. 4 schematically shows an example of the printed circuit board 12. As shown in FIG. 1 and FIG. 4, the plurality of light sources 10 are arranged around an axis p perpendicular to the printed circuit board. Such arrangement is advantageous to utilize the emitting angles of the respective light sources sufficiently, to enhance an area of the cross section of the pattern of the light beam 11 emitted from the second patterning unit 30. Although the printed circuit board 12 shown in FIG. 4 has a shape of circular ring, embodiments of the present disclosure are not limited to this. The printed circuit board 12 may alternatively have any other shapes. And embodiments of the present disclosure are not limited to the printed circuit board 12 carrying the light sources 10. The light sources 10 may alternatively be supported by other structures, such as a support plate.

In an example, a pattern formed by a light beam 11 emitted from at least one of the plurality of the light sources 10 and passing through the first patterning unit 20 and the second patterning unit 30 is overlapped with a pattern formed by another light beam emitted from another one of the plurality of the light sources 10 and passing through the first patterning unit 20 and the second patterning unit 30. It may be achieved by making adjacent light sources close to each other. The distance between adjacent light sources required for achieving overlapped pattern is reduced as the emitting angle of the light source 10 decreases.

In an example, the first patterning unit 20 and the second patterning unit 30 are arranged in parallel to each other. It is advantageous to form uniform and stable patterns. However, embodiments of the present disclosure are not limited to this. For example, the second patterning unit 30 may alternatively be inclined at a certain angle with respect to the first patterning unit 20. Inclining the second patterning unit 30 and the first patterning unit 20 with respect to each other can also cause the shape of the patterns emitted from the second patterning unit 30 to change.

As an example, the light patterning device 100 may further include a driving device 40. The driving device 40 may be arranged to drive movement of movable patterning unit(s) of the first patterning unit 20 and the second patterning unit 30. The driving device 40 may for example be a motor or other movement driving devices known in the art. The driving device 40 may be located at a side of the light source 10 facing away from the first patterning unit 20 and the second patterning unit 30 and is connected to the movable patterning unit(s) via a driving shaft 41. In the example shown in FIG. 1, the printed circuit board 12 carrying the light source 10 has a hole through which the driving shaft 41 passes. In this way, the printed circuit board 12 may be arranged conveniently between the driving device 40 and the first patterning unit 20, so as to achieve a compact structure. Certainly, movement of the movable patterning unit(s) in the light patterning device 100 may also be adjusted manually.

In an example, the plurality of first light deflecting portions 21 may be arranged to adjoin with each other on the first patterning unit 20. The plurality of second light deflecting portions 31 may also be arranged to adjoin with each other on the second patterning unit 30, as shown in FIG. 2 and FIG. 3. It can improve uniformity of the intensity of the light beam emitted from the plurality of first light deflecting portions 21 and/or the plurality of second light deflecting portions 31. In an example, the respective first light deflecting portions 21 and/or second light deflecting portions 31 may have the same size (including such as width, height and profile shape), which is advantageous to form continuous and uniform pattern. However, in other examples, for example in order to form non-uniform patters, the respective first light deflecting portions 21 and/or second light deflecting portions 31 may have different sizes, and even a certain spacing may be provided between adjacent first light deflecting portions 21 and/or between adjacent second light deflecting portions 31.

In an example, the first light deflecting portions 21 may be formed on a side of the first patterning unit 20 facing away from the light source 10, as shown in FIG. 1. However, this is not limitative. The first light deflecting portions 21 may alternatively be formed on a side of the first patterning unit 20 facing towards the light source 10. Similarly, as an example, the second deflecting portions 31 may be formed on a side of the second patterning unit 30 facing away from the light source 10, as shown in FIG. 1. However, this is not limitative. The second light deflecting portions 31 may alternatively be formed on a side of the second patterning unit 30 facing towards the light source 10.

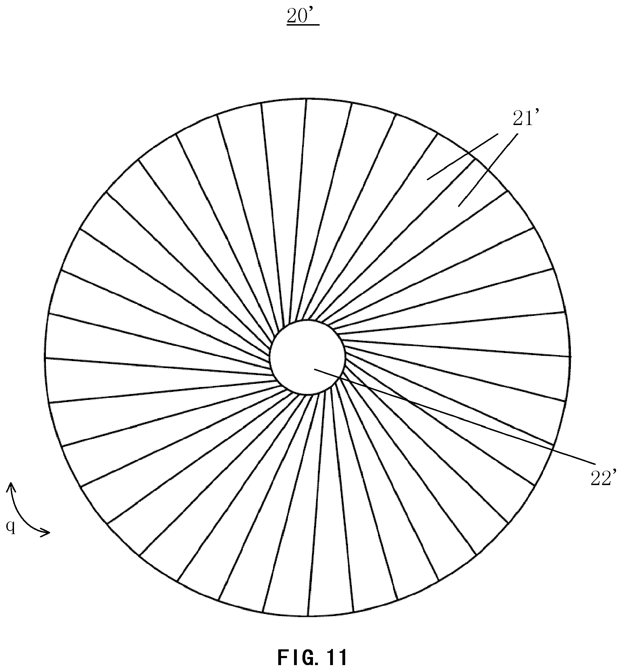

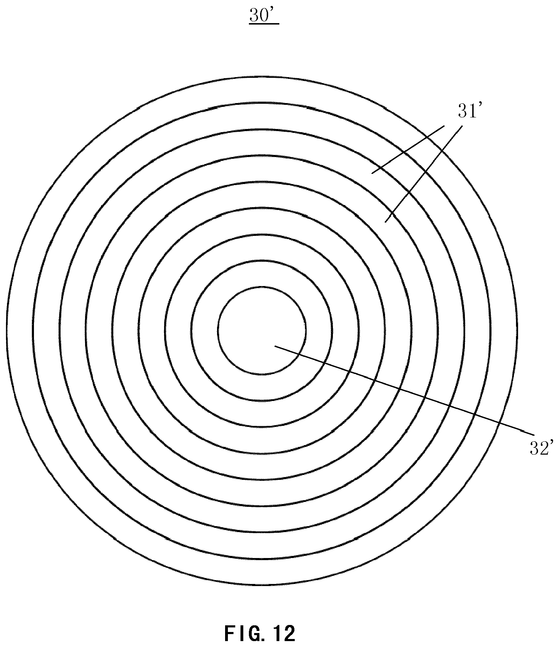

FIG. 11 and FIG. 12 show a first patterning unit 20' and a second patterning unit 30' according to another embodiment of the present disclosure respectively. In the example shown in FIG. 11, the first patterning unit 20' has a first central region 22'. Each of the first light deflecting portions 21' extends from the first central region 22' towards a periphery of the first patterning unit 20'. As an example, the extending direction of the first light deflecting portions 21' may pass through a geometric center of the first patterning unit 20'. However, alternatively, the extending direction of the first light deflecting portions 21' may also deflect from the geometric center of the first patterning unit 20' to some extent as shown in FIG. 11. The extending direction of the first light deflecting portions 21' may be adjusted to some extent depending on the desired shape of the patterns. As an example, structures such as holes may be arranged at the first central region 22', so as to mount or connect the first patterning unit 20' onto a supporting member. However, embodiments of the present disclosure are not limited to this. As an example, the respective first light deflecting portions 21' may be arranged in sequence along a circumferential direction (for example, q direction shown in FIG. 11) of the first central region 22'. As an example, the width of the first light deflecting portions 21' at one end of the first light deflecting portions 21'facing towards the central region 22' may be smaller than the width of the first light deflecting portions 21' at the other end of the first light deflecting portions 21' facing towards the periphery of the first patterning unit 20'.

In the example shown in FIG. 12, the second patterning unit 30' has a second central region 32'. Each of the second light deflecting portions 31' extends around the second central region 32', so as to form a circular ring. However, in other examples of the present disclosure, each of the second light deflecting portions 31' may alternatively be formed as a partial circular ring. As an example, the respective second light deflecting portions 31' are arranged in sequence along a direction from the second central region 32' towards the periphery of the second patterning unit 30', so as to form a plurality of circular rings.

By means of combining the first patterning unit 20' shown in FIG.11 with the second patterning unit 30' shown in FIG. 12, a pattern similar to that shown in FIG. 9 can also be obtained in the cross section of the light beam 11. However, in the examples shown in FIG. 11 and FIG. 12, the first light deflecting portions 21' on the first patterning unit 20' and the second light deflecting portions 31' on the second patterning unit 30' both constitute a centrosymmetric pattern. Thus, when the first patterning unit 20' and the second patterning unit 30' rotate with respect to each other, the patterns in the light beam 11 passing through the first patterning unit 20' and the second patterning unit 30' will not change. However, the first patterning unit 20' and the second patterning unit 30' are not limited completely to the patterns shown in FIG. 11 and FIG. 12. For example, the extending directions of the respective first light deflecting portions 21' in the first patterning unit 20' may be different from each other, and /or the respective second light deflecting portions 31' in the second patterning unit 30' may have a non-circular ring shape, such as an elliptical ring. In this way, when the first patterning unit 20' and the second patterning unit 30' rotate with respect to each other, the patterns in the light beam 11 passing through the first patterning unit 20' and the second patterning unit 30' will change to take dynamical effects.

It should be noted that the positions of the first patterning unit 20' and the second patterning unit 30' may be interchanged, that is, the first patterning unit 20' may have the structure of the second patterning unit 30' as described in any one of the above embodiments and the second patterning unit 30' may have the structure of the first patterning unit 20' as described in any one of the above embodiments.

Although the above specific embodiments have given exemplified structures of the first patterning unit 20, 20' and the second patterning unit 30, 30', embodiments of the present disclosure are not limited to those. The respective first light deflecting portions 21, 21' on the first patterning unit 20, 20' and the respective second light deflecting portions 31, 31' on the second patterning unit 30, 30' may also have other shapes and arrangements as long as they can form the desired combined patterns, in particular dynamical patterns, in the light beam 11 passing through them.

In embodiments of the present disclosure, number of the patterning units in the light patterning device is not limited to two. For example, more patterning units may also be arranged in sequence in the light patterning device.

In embodiments of the present disclosure, the first patterning unit 20 and the second patterning unit 30 may have the same structure. It is advantageous to simplify the manufacturing process.

In embodiments of the present disclosure, the light source 10 may include a light emitting diode or a halogen lamp. However, the present disclosure is not limited to this, for example, the light source 10 may also be any light emitting devices known in the art, such as other solid-state light sources. As an example, the light source 10 has an emitting angle range from zero degree to 120 degrees.

In embodiments of the present disclosure, the first patterning unit 20, 20' and the second patterning unit 30, 30' may be made by a single piece, for example, it may be made into a single plate-shaped member. It is advantageous to simplify the process and enhance optical efficiency. For example, the first patterning units 20, 20' and the second patterning units 30, 30' may be made from a transparent glass, resin or plastic material, such as PMMA (polymethyl methacrylate). The refractivity of the light deflecting portions (such as the first light deflecting portion 21, the second light deflecting portion 31) may for example be in a range between 1.3 and 2.0.

As an example, any one of the first patterning unit 20 and the second patterning unit 30 may be formed by a grating. In this case, each of the light deflecting portions (such as the first light deflecting portion 21, the second light deflecting portion 31) may correspond to one grating unit. The grating may have a pitch equal to the width of the light deflecting portion. Forming the patterning unit (such as the first patterning unit 20, the second patterning unit 30) by the grating can simplify the manufacturing process and system structure. It should be noted that the grating is typically used for diffraction in an optical system; however, in embodiments of the present disclosure, the diffraction effect is not prominent. In particular, when the width d of the light deflecting portion (for example greater than 0.1mm) is greater than visible light wavelengths, the light deflecting portion achieves the display of the indicating patterns mainly by refraction. This is significantly different from the typical application of the grating in the prior art.

As an example, the distance between the light source 10 and the first patterning unit 20 or 20' may for example range from 5mm to 200mm. Any one of the first patterning unit 20, 20' and the second patterning unit 30, 30' as described above may for example have a thickness between 5mm and 200mm.

As an example, the light source 10 may include a white light emitting diode or a monochromatic light emitting diode. When the width d of the light deflecting portion (such as the first light deflecting portion 21, 21' and the second light deflecting portion 31, 31') is greater than the visible light wavelength (for example greater than 0.1mm), the light deflecting portion has no significant effect of color separation for the white light without affecting the visual effects of the exit light. Thus, a white light emitting diode may used as the light source 10. The light source 10 may include one light emitting diode, or an array of light emitting diodes. The light source 10 may be supported by any members known in the art for carrying the light source, such as a lamp mount, a printed circuit board or the like.

It should be noted that, although only two patterning units are described with reference to the drawings in the above texts, the number of the patterning units in the light patterning device may not be limited to two. As long as the visual effects can be improved, any desired number of the patterning units may be provided.

An embodiment of the present disclosure also provides a vehicle lamp including the light patterning device 100 as described in any one of the above embodiments of the present disclosure. The light beam emitted from the second patterning unit 30, 30' may be used to form the lighting and/or signaling light for the vehicle lamp to improve visual effects.

In embodiments of the present disclosure, the light patterning device 100 may be supported or suspended by any known suitable means for holding optical elements, such as a support, a boom, etc.

The vehicle lamp according to the embodiments of the present disclosure may include any types of illumination lamp and/or signal lamp for a motor vehicle, for example, a headlamp, a center high mount stop lamp, a turn signal lamp, a position lamp, a rear stop lamp, a compartment interior lamp or the like.

An embodiment of the present disclosure also provides a motor vehicle, including the light patterning device 100 or the vehicle lamp as described in any one of the above embodiments of the present disclosure.

While the present disclosure has been described in connection with the accompanying drawings, embodiments disclosed in the drawings are intended to illustrate the preferred embodiments of the disclosure and are not to be construed as limiting the invention. The scales in the drawings are merely illustrative and are not to be construed as limiting the invention.

While some embodiments of the general inventive concept have been shown and described, those skilled in the art will appreciate that changes may be made to these embodiments without departing from the principles and spirit of the general inventive concept. The scope of the present invention is defined by the appended claims and their equivalents.

## Claims

1. A light patterning device (100) comprising:

   at least one light source (10) arranged to emit a light beam (11);
   a first patterning unit (20, 20') arranged to receive and pattern the light beam (11), the first patterning unit (20, 20') comprising a plurality of first light deflecting portions (21, 21'); and
   a second patterning unit (30, 30') arranged to receive and pattern the light beam (11) which has been transmitted through the first patterning unit (20, 20'), the second patterning unit (30, 30') comprising a plurality of second light deflecting portions (31, 31'),
   wherein at least one of the first patterning unit (20, 20') and the second patterning unit (30, 30') is movable.

2. The light patterning device (100) according to claim 1, wherein the plurality of first light deflecting portions (21) extend in parallel with one another and the plurality of second light deflecting portions (31) extend in parallel with one another.

3. The light patterning device (100) according to claim 1, wherein the first patterning unit (20') has a first central region (22'), each of the first light deflecting portions (21') extends from the first central region (22') towards a periphery of the first patterning unit (20') and the plurality of first deflecting portions (21') are arranged in sequence along a circumferential direction of the first central region (22'); and
   the second patterning unit (30') has a second central region (32'), each of the second light deflecting portions (31') extends around the second central region (32') and the plurality of second deflecting portions (31') are arranged in sequence along a direction from the second central region (32') towards a periphery of the second patterning unit (30').

4. The light patterning device (100) according to claim 1, wherein the first patterning unit has a first central region, each of the first light deflecting portions extends around the first central region and the plurality of first deflecting portions are arranged in sequence along a direction from the first central region towards a periphery of the first patterning unit; and
   the second patterning unit has a second central region, each of the second light deflecting portions extends from the second central region towards a periphery of the second patterning unit and the plurality of second deflecting portions are arranged in sequence along a circumferential direction of the second central region.

5. The light patterning device (100) according to claim 1, wherein the at least one light source (10) is arranged on a side of the first patterning unit (20, 20') facing away from the second patterning unit (30, 30').

6. The light patterning device (100) according to claim 5, wherein distance between any two of the at least one light source (10), the first patterning unit (20, 20') and the second patterning unit (30, 30') is adjustable.

7. The light patterning device (100) according to claim 1, wherein the first patterning unit (20, 20') and the second patterning unit (30, 30') are translatable and/or rotatable with respect to each other.

8. The light patterning device (100) according to any one of claims 1 to 7, wherein the light patterning device (100) comprises a plurality of the light sources (10).

9. The light patterning device (100) according to claim 8, wherein the plurality of the light sources (10) are arranged in a same plane parallel to the first patterning unit (20, 20').

10. The light patterning device (100) according to claim 8, wherein a distance between at least one of the plurality of the light sources (10) and the first patterning unit (20, 20') is different from a distance between another one of the plurality of the light sources (10) and the first patterning unit (20, 20').

11. The light patterning device (100) according to claim 8, wherein the light patterning device (100) further comprises a printed circuit board (12) carrying the plurality of the light sources (10).

12. The light patterning device (100) according to claim 8, wherein a pattern formed in a light beam (11) emitted from at least one of the plurality of the light sources (10) and passing through the first patterning unit (20, 20') and the second patterning unit (30, 30') is overlapped with a pattern formed in another light beam (11) emitted from another one of the plurality of the light sources (10) and passing through the first patterning unit (20, 20') and the second patterning unit (30, 30').

13. The light patterning device (100) according to claim 1, wherein the first patterning unit (20, 20') and the second patterning unit (30, 30') are arranged in parallel to each other.

14. The light patterning device (100) according to any one of claims 1 to 7, further comprising a driving device (40) arranged to drive movement of movable patterning unit(s) of the first patterning unit (20, 20') and the second patterning unit (30, 30').

15. The light patterning device (100) according to any one of claims 1 to 7, wherein the plurality of first light deflecting portions (21, 21') are arranged to adjoin with each other on the first patterning unit (20, 20'), and the plurality of second light deflecting portions (31, 31') are arranged to adjoin with each other on the second patterning unit (30, 30').

16. The light patterning device (100) according to any one of claims 1 to 7, wherein any one of the first patterning unit (20, 20') and the second patterning unit (30, 30') is formed by a grating.

17. A vehicle lamp comprising the light patterning device (100) according to any one of claims 1 to 16.

18. A motor vehicle, comprising the light patterning device (100) according to any one of claims 1 to 16 or the vehicle lamp according to claim 17.

**FIG. 1**

**F I G. 2**

31

y

FIG. 3

10

12

p

**FIG. 4**

20 (30)

21 (31)

**FIG. 5**

20(30)

21(31)

**FIG. 6**

**FIG. 7**

30

31    11

FIG. 8

50

FIG. 9

51

FIG. 10

FIG. 11

<u>30'</u>

31'

32'

FIG. 12

Europäisches
Patentamt

European
Patent Office

Office européen
des brevets

# EUROPEAN SEARCH REPORT

Application Number

EP 18 19 2075

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/065193 A1 (FUJIFILM CORP [JP]) 20 April 2017 (2017-04-20)<br><br>* see EP 3 364 098 A1 as translation document; figures 2-13 *<br>----- | 1,2,5,<br>7-9,<br>11-15,<br>17,18 | INV.<br>F21S41/20<br>F21S41/143<br>F21S41/63<br>F21S43/20<br>F21S43/14<br>G02B27/42<br>G02B27/22 |
| L | EP 3 364 098 A1 (FUJIFILM CORP [JP]) 22 August 2018 (2018-08-22)<br><br>* please use this document as a translation of WO 2017/065193 A1; paragraphs [0005], [0007] - [0009], [0014], [0017] - [0020], [0030] - [0046]; figures 2-13 *<br>----- | 1,2,5,<br>7-9,<br>11-15,<br>17,18 | G02B27/09<br>G02B3/00<br>G02B5/18<br>F21V5/00<br>F21V5/04<br>F21V14/06 |
| X | US 2016/320627 A1 (CHEN HAN-CHANG [TW] ET AL) 3 November 2016 (2016-11-03) * paragraphs [0001], [0002], [0021], [0035], [0037], [0038]; figures 2,3,5,6 *<br>----- | 1,2,5-16 | |
| X | CN 203 927 521 U (ZHANGJIAGANG KANGDE XIN PHOTOELECTRIC MATERIAL CO LTD) 5 November 2014 (2014-11-05) | 1,2,4,5,<br>7-9,<br>11-15 | TECHNICAL FIELDS SEARCHED (IPC)<br>F21S<br>F21W |
| Y | * see attached machine translation; figures 1-8 *<br>----- | 3 | G02B<br>F21V |
| Y | WO 2016/116290 A1 (PHILIPS LIGHTING HOLDING BV [NL]) 28 July 2016 (2016-07-28) * page 5, line 25 - page 13, line 24; figures 1,2,3c,3d,4a-4c *<br>----- | 3 | |
| | -/-- | | |

The present search report has been drawn up for all claims

| Place of search | Date of completion of the search | Examiner |
|---|---|---|
| Munich | 4 December 2018 | Goltes, Matjaz |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 1 of 2

Europäisches
Patentamt

European
Patent Office

Office européen
des brevets

**EUROPEAN SEARCH REPORT**

Application Number

EP 18 19 2075

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 738 904 A1 (MAGNETI MARELLI SPA [IT]) 23 October 1996 (1996-10-23) * column 4, line 27 - column 12, line 54; figures 1-12 * | 1-7, 13-18 | |
| X | EP 0 999 407 A2 (AUTOMOTIVE LIGHTING ITALIA SPA [IT]) 10 May 2000 (2000-05-10) * paragraphs [0001] - [0004], [0006] - [0010], [0012] - [0019]; figures 1-6 * | 1,2,5-7, 13-15, 17,18 | |
| X | WO 2009/012789 A1 (UNIV INNSBRUCK [AT]; BERNET STEFAN [AT]; RITSCH-MARTE MONIKA [AT]) 29 January 2009 (2009-01-29) * pages 1,2,6-23; figures 1-15 * | 1-4,7, 13-16 | |

TECHNICAL FIELDS SEARCHED (IPC)

The present search report has been drawn up for all claims

| Place of search | Date of completion of the search | Examiner |
|---|---|---|
| Munich | 4 December 2018 | Goltes, Matjaz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 19 2075

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2018

| Patent document cited in search report | | | Publication date | Patent family member(s) | | | Publication date |
|---|---|---|---|---|---|---|---|
| WO 2017065193 | A1 | | 20-04-2017 | CN | 108139046 | A | 08-06-2018 |
| | | | | EP | 3364098 | A1 | 22-08-2018 |
| | | | | JP | WO2017065193 | A1 | 12-07-2018 |
| | | | | US | 2018231210 | A1 | 16-08-2018 |
| | | | | WO | 2017065193 | A1 | 20-04-2017 |
| EP 3364098 | A1 | | 22-08-2018 | CN | 108139046 | A | 08-06-2018 |
| | | | | EP | 3364098 | A1 | 22-08-2018 |
| | | | | JP | WO2017065193 | A1 | 12-07-2018 |
| | | | | US | 2018231210 | A1 | 16-08-2018 |
| | | | | WO | 2017065193 | A1 | 20-04-2017 |
| US 2016320627 | A1 | | 03-11-2016 | CN | 106090699 | A | 09-11-2016 |
| | | | | TW | 201638520 | A | 01-11-2016 |
| | | | | US | 2016320627 | A1 | 03-11-2016 |
| CN 203927521 | U | | 05-11-2014 | NONE | | | |
| WO 2016116290 | A1 | | 28-07-2016 | CN | 107209392 | A | 26-09-2017 |
| | | | | EP | 3248038 | A1 | 29-11-2017 |
| | | | | JP | 2018503132 | A | 01-02-2018 |
| | | | | US | 2018017717 | A1 | 18-01-2018 |
| | | | | WO | 2016116290 | A1 | 28-07-2016 |
| EP 0738904 | A1 | | 23-10-1996 | DE | 69613748 | D1 | 16-08-2001 |
| | | | | DE | 69613748 | T2 | 05-09-2002 |
| | | | | EP | 0738904 | A1 | 23-10-1996 |
| | | | | ES | 2160188 | T3 | 01-11-2001 |
| | | | | IT | TO950312 | A1 | 21-10-1996 |
| EP 0999407 | A2 | | 10-05-2000 | EP | 0999407 | A2 | 10-05-2000 |
| | | | | IT | TO980933 | A1 | 05-05-2000 |
| WO 2009012789 | A1 | | 29-01-2009 | EP | 2174168 | A1 | 14-04-2010 |
| | | | | JP | 5622571 | B2 | 12-11-2014 |
| | | | | JP | 2010533895 | A | 28-10-2010 |
| | | | | US | 2010134869 | A1 | 03-06-2010 |
| | | | | WO | 2009012789 | A1 | 29-01-2009 |

EPO FORM P0459

For more details about this annex : see Official Journal of the European Patent Office, No. 12/82